# EUROPEAN PATENT SPECIFICATION

(11) **EP 3 004 177 B1**
(45) Date of publication and mention of the grant of the patent: **29.01.2025**
(21) Application number: 14737300.5
(22) Date of filing: 02.06.2014
(51) Int. Cl.: C08B 37/00, C08B 37/08, B03B 5/28, B03B 5/44, B01D 21/01

(54) **PROCESS FOR THE REMOVAL OF CONTAMINATION FROM A RAW MATERIAL**
VERFAHREN ZUR ENTFERNUNG VON VERUNREINIGUNGEN AUS EINEM ROHMATERIAL
PROCÉDÉ POUR L'ÉLIMINATION DE CONTAMINATION D'UNE MATIÈRE PREMIÈRE

(30) Priority: 31.05.2013 GB 201309788
(43) Date of publication of application: 13.04.2016
(73) Proprietor: Medtrade Products Limited, Crewe, Cheshire CW1 6GL (GB)
(72) Inventor: HARDY, Craig, St Dogmaels Cardigan SA43 3BH (GB); HOGGARTH, Andrew, Crewe Cheshire CW2 6TA (GB)
(74) Representative: Wilson Gunn
(86) International application number: PCT/GB2014/051682
(87) International publication number: WO 2014/191779

(56) References cited:
- FR-A1- 2 955 788
- US-A- 1 757 103
- US-A- 2 726 766
- US-A- 2 929 502
- US-A- 3 750 233
- US-A- 5 126 058
- US-A1- 2003 060 610
- US-B1- 6 527 124

## Description

The present invention relates to a process for the removal of contamination from a raw material and more particularly to a process for the removal of contamination from a raw material comprising a desirable material, such as chitin and/or chitosan.

Chitosan is a derivative of solid waste from shell fish processing and can be extracted from fungus culture. Chitosan is a linear polysaccharide. It is composed of randomly distributed units of β-(1-4)-linked D-glucosamine (deacetylated unit) and N-acetyl-D-glucosamine (acetylated unit). Chitosan has many uses, including commercial and medical uses. For example, it can be used in agriculture as a seed treatment and biopesticide; in winemaking as a fining agent; in the food industry as a supplement; in limiting fat absorption as a dietary aid; and in industry in self-healing polyurethane paint coatings.

In medicine, chitosan and derivatives thereof such as chitosan salts can be used as haemostats to reduce or stop bleeding. They can also be used as antibacterial agents and/or used to help deliver drugs through the skin.

Chitosan is produced commercially by deacetylation of chitin (a cellulose-like biopolymer consisting of unbranched chains of predominantly β-(1→4)-2-acetamido-2-deoxy-D-glucose (also named N-acetyl-D-glucosamine)) residues, which is the structural element in the exoskeleton of crustaceans (such as crabs and shrimp) and cell walls of fungi.

When manufacturing chitosan from a crustacean source (such as crabs and shrimp), the exoskeleton is mainly sourced from food waste during the removal of the shells. Where these crustaceans are harvested from the ocean/sea bed, there are often sources of contamination, which may include fishing nets and seaweed. Further, it is often found that in the transportation process of the materials from the food processing factory, bags are used, that when cut open, shed fibres. Most manufacturing processes, when producing chitosan flakes/granules, do not fully eliminate the sources of contamination arising during the fishing and transportation processes for example.

Since chitin and/or chitosan and derivatives thereof have desirable properties for use in the medical field, it is important that any contaminants are removed before the material is processed into a medical product for use in the treatment of a patient.

A typical process for converting chitin to chitosan includes the following steps: decalcification of crustacean shells using an acid, such as hydrochloric acid; washing the shells; and deprotonation using an alkali, such as sodium hydroxide. There typically follows the steps of further washing, further decalcification and subsequent neutralising. The material obtained is chitin. The chitin can be deacetylated using alkali, such as sodium hydroxide, to provide chitosan. Following deacetylation, the product may be washed and neutralised before subsequent processing, such as drying and milling. The current processing steps include visual inspection steps and catchment steps, whereby contamination gets trapped around spikes or fingers located in processing pipes, and/or filtering/sieving the material to remove contamination. However, the resulting material still shows visible contamination, which may include fishing line material, seaweed and/or transportation bag material.

It is known e.g. from US 3 750 233 to apply the sink-float separation technique to isolate e.g. shrimps from fish or other floating bodies.

US 2003 / 060 610 discloses the isolation of chitin- or chitosan-containing material following the removal of the shells from a crustacean source during food processing after fishing, the contaminants (lipids, proteins, calcium carbonate) being removed by sieving.

The present invention has been made from a consideration of the aforementioned problems.

The present invention provides a process as defined in claim 1 that addresses the problem of contamination arising from the fishing and transportation processes.

The process of the present invention provides a low cost means for removing or reducing contamination within a raw material that contains a desirable material. The process can advantageously be incorporated into existing manufacturing processes or used as a stand-alone process. It has also been observed that the process has little to no impact on the yield of the desirable material.

The at least one desirable material comprises chitin, chitosan, a chitosan derivative or mixtures thereof. Typically, the at least one desirable material comprises chitin and/or chitosan.

In some embodiments, the raw material is derived from waste following the removal of the shells from a crustacean source during food processing and may comprise more than one desirable material. For example, the raw material may comprise two, three, four or more desirable materials. In some embodiments, the raw material may comprise chitin and chitosan.

The liquid is water.

Preferably, the desirable material does not dissolve in the liquid. The desirable material is at least partially insoluble in the liquid. More preferably, the desirable material is totally insoluble in the liquid Thus, where the desirable material is chitosan and/or chitin, it is preferable that the chitosan and/or chitin are partially or completely insoluble in the liquid. This has advantages over existing techniques. For example, it is known in certain purification techniques to dissolve chitosan in a sufficiently high concentration of acid. However, this can be costly and the step of dissolving chitosan in acid can change the structure of the chitosan. These problems are alleviated by the process of the present invention.

The process of the present invention removes or reduces at least one contaminant from the raw material. The raw material may comprise more than one contaminant. The process may therefore remove or reduce more than one contaminant from the raw material. For example, the process may be utilised to remove two, three, four, five, six, seven, eight, nine, ten or more contaminants from the raw material. In typical embodiments, the process removes or reduces up to five different contaminants from the raw material.

The term "contaminant" is used herein to refer to an undesirable component or substance present in the raw material derived from waste following the step of removing the shells from a crustacean source during food processing, referred to herein as "shell-fish waste". This raw material comprises the desired material chitin and/or chitosan. The shells can be processed to provide chitin which can subsequently be processed into chitosan.. The crustaceans, typically shellfish such as crabs and/or shrimp, are harvested from the ocean/sea bed. The shell-fish waste is selected from the group consisting of fishing nets, fishing lines, transportation bags, seaweed and other flora, or mixtures thereof. Contaminants such as fishing nets may be coloured. Colours may include orange, blue and/or yellow fishing net. Similarly, contaminants such as contamination bags may be coloured. Colours may include red and/or white material.

It has been discovered that the desirable material that is capable of absorbing the liquid will sink in that liquid. The desirable material can thus be separated from floatable contaminants.

It has also been discovered that contaminants of the type typically found in shell-fish waste float when mixed with the liquid, i.e. water.

Typically, the at least one contaminant is not capable of absorbing the liquid.

Typically, the at least one contaminant will float in the liquid.

The at least one contaminant is at least partially insoluble in the liquid. More preferably, the at least one contaminant is totally insoluble in the liquid. Where the at least one contaminant is fishing net, fishing line, transportation bag, seaweed and/or other flora, the contaminant is partially or completely insoluble in the liquid.

Desirable materials in shell-fish waste such as chitin or chitosan can absorb fluid from the liquid and sink. Following such a separation within the liquid, it is possible to collect the floatable contaminants from the surface of the liquid whilst separately retaining the desirable material which has settled at or toward the bottom of the liquid.

Thus, the step of allowing the raw material to separate in the separation container comprises allowing at least a portion of the at least one contaminant to float to the surface of the liquid.

In some embodiments, therefore, not all of the one or more contaminants in the raw material will float to the surface of the liquid. Preferably, however, substantially all of the one or more contaminants in the raw material float to the surface of the liquid.

Once the raw material is mixed with the liquid, it may be allowed to separate in the separation container for a period of time sufficient to allow a portion of the at least one contaminant to float to the surface of the liquid contained therein. The length of time may vary from 1 minute to 24 hours, preferably from 5 minutes to 12 hours, more preferably from 10 minutes to 6 hours and most preferably from 15 minutes to 1 hour.

The process of the present invention may be performed using an apparatus comprising a separation container suitable for containing a liquid and a means by which a raw material can be transported to the separation container.

The separation container may comprise any suitable vessel that can contain a liquid. Suitable containers may be, for example, a beaker, a flask, a tank, a chamber.

For large scale operations, the separation container may be a tank. The separation container may form a part of an existing processing line. On a smaller scale, the separation container may be a beaker or a flask, such as those commonly used in a laboratory.

The volume of the container may be selected to suit the amount of raw material to be decontaminated. Typically, the container may vary in volume from around 500ml up to 50 litres or more. Preferably, containers having a volume capable of holding up to two tonnes of liquid are preferred.

The floating contaminant(s) are removed from the liquid. Thus, the process of the present invention comprises the further step of removing the floating contaminant(s) from the liquid

Removal of the floating contaminant(s) can be achieved by any suitable means known to a person skilled in the art.

In some embodiments, the floating contaminant(s) are removed using an overflow system, a pump system or a catchment system.

In an overflow system, the apparatus comprises an overflow outlet. The overflow outlet is suitable to allow liquid to flow out of the container once a certain volume or liquid level is reached.

The overflow outlet may comprise a flow control means. The flow control means is operable to allow or prevent flow through the overflow outlet. The flow control means may comprise a tap or a plug. The overflow outlet may be located in a wall of the separation container. In operation to remove some or all of the contaminant(s), further liquid may be introduced into the container until the surface of the liquid contents reaches or passes the overflow outlet. The flow control means may be set to allow flow of the liquid through the overflow outlet and out of the container, carrying some or all of the floating contaminant(s) with it. Additional liquid may be continually or intermittently introduced into the container until substantially all of the contaminant(s) has been carried out of the container. The overflow system may comprise a re-circulation system whereby the liquid, typically water, is pumped from the container through a sieve system, which can collect the contaminant(s), and back into the container.

In a pump system, the apparatus comprises a pump and an overflow collection device. The overflow collection device comprises any suitable means for collecting the contaminant(s). Liquid, typically water, is pumped from the container through a sieve system and then back into the container. The water pumped back into the container is directed such that it creates a surface water flow that moves the floating contaminant(s) toward the overflow collection device.

In a catchment system, a catchment means may be utilised to collect the contaminant. The catchment means is operable to catch or collect contaminant(s). The catchment means may comprise a net and/or a sieve. The mesh size of the sieve may be varied to collect contaminants of varying sizes. For example, a first sieve with a mesh size of 4mm may remove larger contaminant material, followed by a second sieve having a mesh size of 2mm to remove smaller contaminant material. It is possible to utilise even smaller mesh sizes to remove further contaminant(s). Sieves with a mesh size as low as 100 microns can be utilised. The catchment means may be manual or automated.

Preferably, the contaminants are collected using an overflow system.

The desirable material may flow out the container with the liquid through a separate outlet to the contaminants. The outlet may be located toward or in the base surface of the container. The flow of liquid through the outlet may be controlled by a flow control means. The flow control means is operable to allow or prevent flow through the outlet. The flow control means may comprise a tap or a plug.

The desirable material, typically chitosan, may be pumped through an outlet of the container with the liquid. The desirable material and liquid may pass through a sieve or filter having a mesh size suitable for retaining the desirable material and allowing the liquid to flow through. The desirable material may then be further processed in a compression system. In the compression system, excess liquid can be squeezed from the desirable material.

The container typically comprises a chamber suitable for containing the liquid phase, one or more inlets through which the liquid and the raw material can enter the chamber and one or more outlets through which the liquid, contaminants and/or desirable material may be removed.

The liquid and/or the raw material may be introduced into the container through one or more inlets.

In some embodiments, the container may comprise separate inlets for the liquid and the raw material. In such embodiments, the liquid may be introduced into the container through a first inlet and the raw material may be introduced through a second inlet, separate to the first. Thus, the raw material is mixed with the liquid in the container. This may be appropriate for stand-alone processes. For example, the first inlet may be connected to a mains water supply to provide water to the container. The sample of raw material can then be introduced into the container through the second inlet.

In some embodiments, the raw material may be mixed with the liquid before being introduced into the container. In such embodiments, the raw material and liquid may be introduced into the container through the same one or more inlets. This may be appropriate where the present process is incorporated into an existing processing line. For example, the raw material may be mixed with the liquid in a previous processing step, or during transfer to the container from a previous processing step.

The container may comprise separate inlets for introducing further liquid and/or further raw material.

Good results have been observed when the raw material and liquid have been mixed in a certain ratio. Preferably, the raw material and liquid are mixed in a ratio of 20 parts liquid to 1 part raw material, or higher. The ratio may be as low as 5 parts liquid to 1 part raw material, or higher.

In some embodiments, the container may comprise a first outlet for the liquid and floating contaminants, such as an overflow outlet, and a second outlet for the liquid and desirable material, such as a drain. The outlet for the liquid and the desirable material is preferably located in the base of the container. This is appropriate since the desirable material absorbs the liquid and sinks and settles toward or at the base of the container.

In some embodiments, the container comprises an inspection port. The inspection port provides a means of viewing the contents of the container. This allows for the contents to be monitored for the separation of the contaminant(s) from the desirable material.

The process of the present invention may further comprise the step of agitating the liquid. Beneficially, the agitation of the liquid containing the raw material has been found to aid the separation of the one or more contaminants from the desirable material.

The liquid may be agitated before or after the raw material is added thereto. Typically, the liquid is agitated after the raw material is added thereto.

The step of agitating the liquid may be automated.

In some embodiments, the container comprises a mixing means suitable for agitating the liquid. The mixing means may comprise any means know in the art suitable for agitating the liquid phase.

Preferably, the mixing means comprises a rotary mixing blade or blades. The mixing blade(s) may be located on a shaft driven by a motor. The motor may be linked to a control means in connection with a power supply. The control means may be operable to adjust the rotation speed of the rotary mixing blade(s) and/or the duration of rotation and may be programmable to perform a defined mixing sequence as desired or as appropriate. Alternative mixing means may comprise a paddle mixer, a z-fold mixer, a planetary mixer or a rotational mixer.

The raw material in the liquid phase may be agitated for a period of around 60 minutes or less, preferably for a period of around 30 minutes or less, more preferably for a period of around 20 minutes or less and most preferably for a period of around 15 minutes or less. In some embodiments, the agitation period may be greater than 60 minutes.

The degree of mixing may be varied depending on the amount of raw material and/or volume of the liquid. In some embodiments, the rotation speed of the rotary mixing blade(s) may be adjusted. For example, the rotation speed of the rotary mixing blade(s) may be set at a high, medium or low speed depending on the requirements of the mixing. The rotary mixing blade(s) may be set to rotate in short bursts at a selected speed to improve agitation of the liquid. Alternatively, the rotary mixing blade(s) may be set to rotate continuously at a constant or varying speed. For example, the rotary mixing blade may be programmed to gradually increase or decrease in speed over a set period of time.

The agitation of the liquid containing the raw material may be repeated one or more times. Thus, the present invention may comprise the step of re-agitating the liquid containing the raw material. The re-agitation step can comprise any of the features or conditions as described for the initial agitation step.

The desirable material that is obtained by the process of the present invention may be transferred to a second container in which the process is repeated. The process may be repeated sequentially. In some embodiments, the first separation container may be connected to a second separation container via a conduit through which the desirable material from the first container may be transferred to the second container for repeat decontamination.

Alternatively, the raw material may undergo a separate processing step, such as decalcification or deprotonation, before repeating the process of the present invention.

The process of the present invention provides a means of removing contaminants from a raw material to provide a clean desirable material.

Desirably, it provides a means of removing typical contaminants found in shell-fish waste, which contains desirable material such as chitin and/or chitosan. The chitin and/or chitosan obtained from the process is suitable for use in the manufacture of a medical material. The medical material may be a haemostatic material, such as a haemostatic wound dressing, powder, fibre, granules, gel, foam, liquid and the like.

The process can be utilised as a stand-alone process in which the desirable material can be separated from a batch of raw material. The desirable material obtained by the process can be stored and transported to a desired location, such as a processing plant or laboratory.

Alternatively, the process can be incorporated into existing manufacturing processes. For example, the process can be incorporated into the typical process for converting chitin into chitosan which comprises steps including washing, decalcification, deprotonation and deacetylation. Advantageously, the process of the present invention could be incorporated into any, some or all of these stages. Additionally or alternatively, the process may be incorporated into a washing step of the chitosan and/or following final product manufacture.

The present invention will now be described further by way of example only with reference to the following examples and accompanying drawings, in which:
- Figure 1:: is a diagrammatic representation of an apparatus for carrying out the process of

- Figure 2:: the present invention; is a diagrammatic representation of an alternative embodiment of the apparatus for carrying out the process of the present invention.

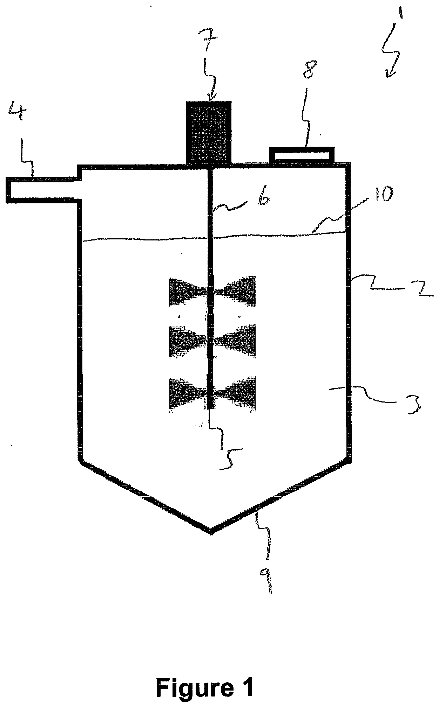

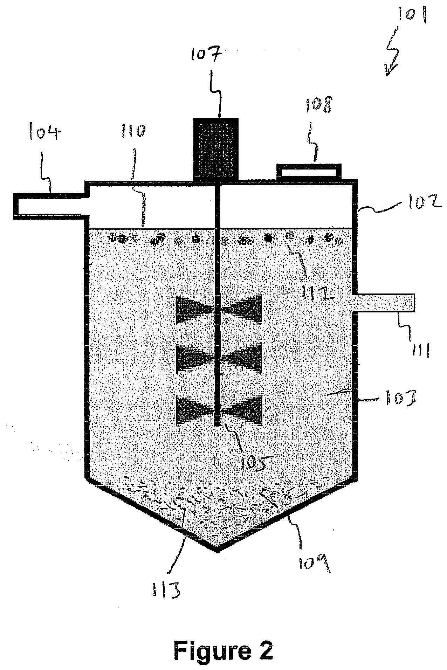

The apparatus shown in Figures 1 and 2 can be implemented as stand-alone system or incorporated into an existing manufacturing process line.

Referring to Figure 1, there is shown an apparatus 1 for removing or reducing the contamination from a raw material. The apparatus 1 comprises a tank 2 suitable for containing a liquid 3. In the present embodiment, the liquid 3 is water. The tank comprises an inlet pipe 4 through which the water 3 flows into the tank 2. The water 3 flowing into the tank 2 comprises raw material (not shown). The raw material comprises fishing net and bag contaminants and chitosan desirable material.

The apparatus 1 further comprises rotary mixing blades 5 affixed to a shaft 6 that is driven by a motor 7. The rotary mixing blades 5 provide a means of agitating the water 3 containing the raw material.

The tank 2 is fitted with an inspection port 8 which allows an operator to view the contents of the tank 2 during the process.

In use, raw material (not shown) will be mixed with water 3 in the tank 2. The water 3 is agitated by the rotary mixing blades 5. The chitosan will absorb water and, in doing so, swell and sink toward the base 9 of the tank 2. In contrast, the fishing net and bag contaminants do not absorb water and float toward the surface 10 of the water 3. Thus, the chitosan is able to be separated from the contaminants in the raw material. The floating contaminants can be removed from the water 3 using a net and/or sieve (not shown). The chitosan can be collected using a filter or sieve and progressed to subsequent processing.

Referring to Figure 2, there is shown an apparatus 101 for removing or reducing the contamination from a raw material. The apparatus 101 comprises a tank 102 suitable for containing a liquid 103. In the present embodiment, the liquid 103 is water. The tank comprises an inlet pipe 104 through which the water 103 flows into the tank 102. The water 103 flowing into the tank 102 comprises raw material (not shown). The raw material comprises fishing net and bag contaminants and chitosan desirable material.

The apparatus 101 further comprises rotary mixing blades 105 affixed to a shaft 106 that is driven by a motor 107. The rotary mixing blades 105 provide a means of agitating the water 103 containing the raw material.

The tank 102 is fitted with an inspection port 108 which allows an operator to view the contents of the tank 102 during the process.

Further, the tank 102 comprises an overflow outlet 111. The overflow outlet 111 provides a means by which the contaminants 112 can be removed from the tank 102.

In use, raw material (not shown) will be added to water 103 in the tank 102. The water 103 is agitated by the rotary mixing blades 105. The chitosan 113 will absorb water and, in doing so, swell and sink toward the base 109 of the tank 102. In contrast, the fishing net and bag contaminants 112 do not absorb water and float toward the surface 110 of the water 103. Thus, the chitosan is able to be separated from the contaminants in the raw material. The contaminants 112 may then be removed by opening of the overflow outlet 111 through which the water 103 will flow carrying the contaminants 112 with it. Further water 103 can be added to the tank 102 until all contaminants 112 have passed out through the overflow outlet 111.

A pump (not shown) is used to pump the chitosan 113 through the overflow outlet 111 with the water 103. The chitosan 113 and water 103 will then pass through a sieve (not shown) having a mesh size suitable for preventing the chitosan 113 from passing through. The chitosan 113 is then be collected from the sieve and transferred to a compression system (not shown), in which excess water 103 is squeezed from the chitosan 113.

The following examples show the testing and processing steps taken in realising the present invention.

### Reference Example 1:

Several samples of different contaminants were harvested off a production line. The contaminants included red bag material, white bag material, orange fishing net, yellow fishing net, blue fishing net and seaweed.

The above contaminants were placed in a 500ml beaker. Approximately 400ml of water was added to the beaker followed by agitation.

The beaker was then left for five minute followed by a visual assessment.

It was observed that the red bag material, white bag material, orange fishing net, yellow fishing net, blue fishing net and some seaweed had floated to the surface of the water.

### Reference Example 2:

The method of Reference Example 1 was repeated using the same contaminants but cut to different lengths. The minimum length of contaminant was 3mm.

It was observed that all contaminants floated to the surface, irrespective of size and length. This shows that size and length of contaminant has no impact.

### Example 3:

A sample of wet chitosan was obtained from a current processing line. Visually, it was determined that there was red fibre contamination within the material.

A sample of the material was added to a 2L beaker. The beaker was filled with water and left for five minutes. After this time, a visual assessment was carried out.

It was observed that red fibres had floated to the surface of the water and the chitosan had sunk to the bottom of the beaker. The visual observation detected some residual red fibres trapped within the chitosan that had settled at the bottom of the beaker.

### Example 4:

A wetted chitosan was mixed with known contaminants red and white bag material and several colours of fishing net, the contaminants having varying lengths.

The material was added to a 2L beaker and filled with water. A rotary mixing blade was added to the beaker around 6-8cm from the bottom. The blades of the rotary mixing blade were rotated for approximately two minutes at medium speed and stopped. The beaker was left undisturbed for five minutes before a visual assessment was carried out.

It was observed at the end of five minutes that approximately 90-95% of the contaminant fibres had floated to the surface of the water. The chitosan had settled at the bottom of the beaker, and was visually observed to contain residual contaminants.

### Example 5:

The method of Example 4 was repeated but with a higher agitation of the blades of the rotary mixing blade. Further, instead of stopping the blades rotating after approximately two minutes, they were maintained at a slow speed. This ensured continual agitation of the surface of the sinking chitosan.

It was observed that there were no visually trapped contaminants within the chitosan.

### Example 6:

The method of Example 5 was repeated but with the addition of an anti-foamer in the water. This was to assess whether the addition of an anti-foamer to reduce the surface tension aided the process.

It was observed that the addition of an anti-foamer appeared to aid the sedimentation of the chitosan, making it sink more quickly.

### Example 7:

Dry chitin was mixed with known contaminants red and white bag material and several colours of fishing net, the contaminants having varying lengths.

The material was added to a 2L beaker. The beaker was filled with water and mixed for two minutes using a rotary mixing blade. The beaker was left undisturbed for fifteen minutes before a visual assessment was carried out.

It was observed at the end of the fifteen minutes that approximately 90-95% of the contaminant fibres had floated to the surface of the water. The chitin had settled at the bottom of the beaker, and was visually observed to contain residual contamination.

The water was re-agitated with the rotary mixing blade.

It was observed that re-agitation of the water freed the trapped contaminants.

### Example 8:

The method of Example 5 was repeated. At the end of the process, the beaker was left for one hour to allow the chitosan to fully settle.

The rotary mixing blade was then turned on to determine whether the settled chitosan could be re-agitated. The blades were rotated at varying speeds from low to high.

It was observed that at low speed, only the surface of the settled chitosan was agitated. At medium and high speeds, all of the settled chitosan was agitated and distributed throughout the water.

It was preferable to repeat the process of agitation.

### Reference Example 9:

The method of Reference Example 2 was repeated in a 500ml beaker.

Once the contaminants had floated to the surface of the water, water was added to the beaker from one side until the point of overflowing. The initial overflow was minimal followed by a repetition of the process whereby there was a significant excess overflow.

It was observed that with minimal overflow, it was not possible to remove the contaminants from the beaker. With excess overflow, the contaminants flowed over the side of the beaker.

It was noted that if water was added over the contaminants, it forced some of the contaminants down into the water such that when the overflow occurred, only some of the contaminants were removed from the beaker.

If the overflow was undertaken before the contaminants had floated to the surface, then the method of removing the contaminants only partially worked.

### Reference Example 10:

The method of Reference Example 9 was repeated but with a 2L conical flask with a side arm (normally used for vacuum filtration) below the water level. The opening to the side arm was sealed using the fingertip.

Once the contaminants had floated to the surface of the water, the finger was removed allowing water to escape via the side arm.

It was observed that for three out of four times the contaminants fully escaped through the side arm. On the occasion where this did not occur, some contaminant was adhered to the angled surface of the conical flask. Approximately 80% of the contaminants were removed via this method.

### Reference Example 11:

The method of Reference Example 2 was repeated using a 2L beaker.

After the contaminants had floated to the surface, a sieve was used to remove the contaminants.

It was observed that this was a suitable method for removing the contaminants. However, additional care was required since excessive force within the water resulted in some contaminants sinking.

It is of course to be understood that the present invention is not intended to be restricted to the foregoing examples which are described by way of example only.

## Claims

1. A process for removing or reducing contamination from a raw material, the process comprising:
mixing a raw material derived from waste following the removal of the shells from a crustacean source during food processing with water, wherein the raw material comprises at least one contaminant, the at least one contaminant selected from the group consisting of a fishing net, fishing line, transportation bag, seaweed and other flora, or mixtures thereof and at least one desirable material, wherein the at least one desirable material comprises chitin, chitosan, a chitosan derivative or mixtures thereof, the at least one contaminant and the at least one desirable material being at least partially insoluble in water, and wherein the at least one desirable material is capable of absorbing water; and
allowing the at least one contaminant and at least one desirable material to separate in a separation container, comprising allowing at least a portion of the at least one contaminant to float to the surface of the water and wherein the process comprises the step of removing the floating contaminant(s) from water

2. A process as claimed in claim 1, wherein the length of time allowed for at least a portion of the at least one contaminant to float to the surface of water is from 1 minute to 24 hours.

3. A process as claimed in any preceding claim, wherein the at least one contaminant is removed from the water utilising an overflow system, a pump system or a catchment system.

4. A process as claimed in claim 3, wherein the overflow system comprises the introduction of water into the container until the surface of the water reaches or passes an overflow outlet operable to allow water to flow out of the container; wherein the overflow outlet optionally comprises a flow control means operable to allow or prevent flow through the overflow outlet.

5. A process as claimed in claim 4, wherein the water is pumped out of the container through a sieve system, wherein the sieve system is operable to collect the at least one contaminant.

6. A process as claimed in any one of claims 4 to 5, wherein the water flowing out of the container is recycled back into the container.

7. A process as claimed in claim 3, wherein the pump system comprises pumping water from the container through a sieve system and then back into the container, wherein the water pumped back into the container is directed such that it creates a surface water flow that moves the at least one contaminant toward an overflow collection device; or wherein the catchment system comprises catching or collecting the at least one contaminant using a net and/or a sieve.

8. A process as claimed in any preceding claim, wherein the at least one desirable material is pumped through an outlet of the container with the water; optionally wherein the at least one desirable material and the water pass through a sieve or filter operable to retain the at least one desirable material; and wherein the at least one desirable material is optionally further processed in a compression system operable to squeeze excess water from the material.

9. A process as claimed in any preceding claim, wherein the ratio of water to raw material is 5:1 or higher.

10. A process as claimed in any preceding claim, further comprising the step of agitating the water; optionally wherein the water is agitated for a period of around 60 minutes or less and/or wherein the agitation of the water is repeated one or more times.

## Patentansprüche

1. Verfahren zum Entfernen oder Reduzieren von Verunreinigungen aus einem Rohmaterial, wobei das Verfahren umfasst:
Mischen eines Rohmaterials, abgeleitet aus Abfall in Folge der Entfernung der Schalen von einer Krustentierquelle während einer Lebensmittelverarbeitung mit Wasser, wobei das Rohmaterial wenigstens eine Verunreinigung enthält, wobei die wenigstens eine Verunreinigung ausgewählt ist aus der Gruppe bestehend aus einem Fischnetz, einer Angelleine, einer Transporttasche, Seetang und anderer Flora oder Mischungen davon, und wenigstens ein erwünschtes Material, wobei das wenigstens eine erwünschte Material Chitin, Chitosan, ein Chitosanderivat oder Mischungen davon umfasst, wobei die wenigstens eine Verunreinigung und das wenigstens eine erwünschte Material in Wasser wenigstens teilweise unlöslich sind, und wobei das wenigstens eine erwünschte Material Wasser absorbieren kann; und
Ermöglichen, dass sich die wenigstens eine Verunreinigung und das wenigstens eine erwünschte Material in einem Separationsbehälter separieren, umfassend ein Ermöglichen, dass wenigstens ein Teil der wenigstens einen Verunreinigung an die Oberfläche des Wassers treibt, und wobei das Verfahren den Schritt des Entfernens der treibenden Verunreinigung(en) aus dem Wasser umfasst.

2. Verfahren nach Anspruch 1, wobei die Länge der Zeit, die eingeräumt wird, damit wenigstens ein Teil der wenigstens einen Verunreinigung an die Oberfläche des Wassers treibt, von 1 Minute bis 24 Stunden ist.

3. Verfahren nach einem der vorhergehenden Ansprüche, wobei die wenigstens eine Verunreinigung aus dem Wasser unter Verwendung eines Überlaufsystems, eines Pumpsystems oder eines Auffangsystems entfernt wird.

4. Verfahren nach Anspruch 3, wobei das Überlaufsystem das Einbringen von Wasser in den Behälter umfasst, bis die Oberfläche des Wassers einen Überlaufauslass erreicht oder übersteigt, der es im Betrieb dem Wasser ermöglicht, aus dem Behälter zu fließen; wobei der Überlaufauslass optional ein Strömungssteuermittel umfasst, das dazu betreibbar ist, eine Strömung durch den Überlaufauslass zu ermöglichen oder zu verhindern.

5. Verfahren nach Anspruch 4, wobei das Wasser durch ein Siebsystem aus dem Behälter gepumpt wird, wobei das Siebsystem dazu betreibbar ist, die wenigstens eine Verunreinigung aufzusammeln.

6. Verfahren nach einem der Ansprüche 4 bis 5, wobei das Wasser, das aus dem Behälter strömt, in den Behälter zurück recycelt wird.

7. Verfahren nach Anspruch 3, wobei das Pumpsystem ein Pumpen von Wasser von dem Behälter durch ein Siebsystem und dann zurück in den Behälter umfasst, wobei das in den Behälter zurückgepumpte Wasser derart gerichtet wird, dass es eine Oberflächenwasserströmung erzeugt, die die wenigstens eine Verunreinigung in Richtung einer Überlaufsammelvorrichtung bewegt; oder wobei das Auffangsystem ein Auffangen oder Aufsammeln der wenigstens einen Verunreinigung unter Verwendung eines Netzes und/oder eines Siebs umfasst.

8. Verfahren nach einem der vorhergehenden Ansprüche, wobei das wenigstens eine erwünschte Material durch einen Auslass des Behälters mit dem Wasser gepumpt wird; wobei optional das wenigstens eine erwünschte Material und das Wasser ein Sieb oder einen Filter passieren, das/der dazu betreibbar ist, das wenigstens eine erwünschte Material zurückzuhalten; und wobei das wenigstens eine erwünschte Material optional ferner in einem Kompressionssystem bearbeitet wird, das dazu betreibbar ist, überschüssiges Wasser aus dem Material zu pressen.

9. Verfahren nach einem der vorhergehenden Ansprüche, wobei das Verhältnis von Wasser zu Rohmaterial 5:1 oder höher ist.

10. Verfahren nach einem der vorhergehenden Ansprüche, ferner umfassend den Schritt des Rührens des Wassers; wobei optional das Wasser während einer Periode von circa 60 Minuten oder weniger gerührt wird und/oder wobei das Rühren des Wassers einmal oder mehrere Male wiederholt wird.

## Revendications

1. Un procédé d'élimination ou de réduction de la contamination d'une matière première, le procédé comprenant :
mélanger une matière première provenant d'un effluent à la suite du retrait des coquilles d'une source de crustacés pendant un traitement de produit alimentaire par de l'eau, dans lequel la matière première comprend au moins un contaminant, le au moins un contaminant étant sélectionné dans le groupe consistant en un filet de pêche, une ligne de pêche, un sac de transport, du goémon et d'autres flores ou leurs mélanges et au moins une matière souhaitable, dans lequel la au moins une matière souhaitable comprend de la chitine, du chitosane, un dérivé de chitosane ou leurs mélanges, le au moins un contaminant et la au moins une matière souhaitable étant insoluble au moins en partie dans l'eau, et dans lequel la au moins une matière souhaitable est apte à absorber de l'eau ; et
laisser le au moins un contaminant et la au moins une matière souhaitable se séparer dans un récipient de séparation, comprenant laisser au moins une partie du au moins contaminant flotter à la surface de l'eau et dans lequel le procédé comprend le stade de retirer le ou les contaminant(s) flottants de l'eau.

2. Un procédé tel que revendiqué dans la revendication 1, dans lequel la durée allouée pour qu'au moins une partie du au moins un contaminant flotte à la surface de l'eau va de 1 minute à 24 heures.

3. Un procédé tel que revendiqué dans n'importe quelle revendication précédente, dans lequel le au moins un contaminant est retiré de l'eau en utilisant un système de débordement, un système de pompage ou un système de captation.

4. Un procédé tel que revendiqué dans la revendication 3, dans lequel le système de débordement comprend l'introduction de l'eau dans le récipient jusqu'à ce que la surface de l'eau atteigne ou dépasse une sortie de débordement, qui peut fonctionner pour permettre à de l'eau de sortir du récipient ; dans lequel la sortie de débordement comprend éventuellement un moyen de commande de l'écoulement pouvant fonctionner pour permettre ou empêcher un écoulement par la sortie de débordement.

5. Un procédé tel que revendiqué dans la revendication 4, dans lequel on pompe l'eau hors du récipient en passant à travers un système de tamisage, dans lequel le système de tamisage peut fonctionner pour recueillir le au moins un contaminant.

6. Un procédé tel que revendiqué dans l'une quelconque des revendications 4 à 5, dans lequel on recycle dans le récipient l'eau sortant du récipient.

7. Un procédé tel que revendiqué dans la revendication 3, dans lequel le système de pompage comprend pomper de l'eau du récipient en passant dans un système de tamisage, puis en la retournant dans le récipient, dans lequel l'eau repompée dans le récipient est dirigée de manière à créer un écoulement de l'eau en surface, qui fait aller le au moins un contaminant vers un dispositif de recueillement par débordement ; ou dans lequel le système de captation comprend capter ou recueillir le au moins un contaminant en utilisant un filet et/ou un tamis.

8. Un procédé tel que revendiqué dans n'importe quelle revendication précédente, dans lequel la au moins une matière souhaitable est pompée avec l'eau dans une sortie du récipient ; dans lequel éventuellement la au moins une matière souhaitable et l'eau passent à travers un tamis ou un filtre pouvant fonctionner pour retenir la au moins une matière souhaitable ; et dans lequel la au moins une matière souhaitable est éventuellement traitée en outre dans un système de compression pouvant fonctionner pour exprimer de l'eau en excès de la matière.

9. Un procédé tel que revendiqué dans n'importe quelle revendication précédente, dans lequel le rapport de l'eau à la matière première est de 5:1 ou plus grand.

10. Un procédé tel que revendiqué dans n'importe quelle revendication précédente, comprenant en outre le stade d'agiter l'eau ; dans lequel éventuellement on agite l'eau pendant une durée d'environ 60 minutes ou moins et/ou dans lequel on répète l'agitation de l'eau une fois ou plusieurs fois.
